# EUROPEAN PATENT SPECIFICATION

(11) **EP 3 947 750 B1**
(45) Date of publication and mention of the grant of the patent: **09.12.2026**
(21) Application number: 20716567.1
(22) Date of filing: 17.03.2020
(51) Int. Cl.: C21C 5/52, C21C 7/00, C21C 7/06, C21C 7/064, C22B 5/04, C22B 7/00, C22B 7/04, C21C 5/54

(54) **A PROCESS FOR FORMING CHROMIUM-ALLOY STEEL FROM CHROMIUM OXIDE**
VERFAHREN ZUR HERSTELLUNG VON CHROMLEGIERUNGS-STAHL AUS CHROMOXID
PROCÉDÉ DE FORMATION D'UN ACIER À ALLIAGE DE CHROME À PARTIR D'OXYDE DE CHROME

(30) Priority: 01.04.2019 US 201962827543 P
(43) Date of publication of application: 09.02.2022
(73) Proprietor: SAUDI IRON AND STEEL COMPANY (HADEED), Jubail Industrial City 31961 (SA)
(72) Inventor: ALHARBI, Mansour Nasser, 11669 Jubail, 31961 (SA); ALMUTAIRI, Sami Muteib, 11669 Jubail, 31961 (SA); TADIBOYINA, Malleswara Rao, 6160 AH Geleen (NL)
(74) Representative: Balder IP Law, S.L.
(86) International application number: PCT/IB2020/052429
(87) International publication number: WO 2020/201869

(56) References cited:
- WO-A1-2006/131764
- SU-A1- 1 101 454
- US-A1- 2008 156 144
- JOO HYUN PARK ET AL: "Reduction Behavior of EAF Slags Containing Cr2O3 Using Aluminum at 1 793 K", ISIJ INTERNATIONAL, vol. 44, no. 5, 15 May 2004 (2004-05-15), pages 790 - 794, XP055690549, DOI: https://doi.org/10.2355/isijinternational.44.790

## Description

### CROSS REFERENCE TO RELATED APPLICATIONS

This application claims the benefit of priority of U.S. Provisional Patent Application No. 62/827,543, filed April 1, 2019.

### FIELD OF INVENTION

The present invention generally concerns processes for metal recycling and producing metal alloys. In particular, the invention concerns processes for producing chromium-alloy steel from chromium oxide.

### BACKGROUND OF THE INVENTION

Chromium oxide containing waste materials such as chromium oxide containing spent catalysts are primarily disposed as landfills and can create environmental hazards. There is a need for cost effective recycling methods for chromium oxide containing waste materials.

### BRIEF SUMMARY OF THE INVENTION

A discovery has been made that provides a solution to the problems of disposal of chromium oxide containing compositions. The solution is premised on recycling chromium in chromium oxide to form chromium-alloy steel.

The present invention is defined in the appended claims. The chromium oxide can be reduced at a temperature of 1400 °C to 1800 °C, preferably 1500 °C to 1650 °C, more preferably 1550 °C to 1600 °C. According to the invention, the chromium oxide is chromium (III) oxide (Cr₂O₃). According to the invention, the first composition further contains alumina. According to the invention, the first composition contains 10 to 25 wt. %, preferably 15 to 20 wt. % Cr₂O₃ and 70 to 85 wt. %, preferably 75 to 80 wt. % alumina. According to the invention, the first composition can further contain SiO₂ and K₂O with total amount 0 to 5 wt. %. In some aspects, the first composition is a spent catalyst. In step (b) the chromium oxide is reduced by metallic aluminum and the process includes adding aluminum to the second composition. The aluminum can be added to the second composition before, during or after addition of the first composition to the second composition. At least a portion of the aluminum added can reduce the chromium oxide to form alumina and the metallic chromium and at least a portion of the aluminum added can react with dissolved oxygen in the molten steel to form alumina. In some aspects, aluminum in form of an aluminum dross and/or an aluminum wire can be added to the second composition. In some aspects, the second composition can contain a slag on a top portion of the molten steel. In step (a) the first composition can be added to the slag. The slag can absorb at least a portion of the alumina formed and/or added during the process and can remove alumina from the molten steel. In some aspects, lime can be added to the slag. In some aspects, a slag conditioner can be added to the slag. An argon containing gas can be purged from a bottom portion of the molten steel. The argon containing gas can be purged at a rate suitable to lift up alumina particles in the molten steel. In some aspects, the process can further include adding one or more metals to the second composition, and the one or more metals can get mixed with the molten steel to form one or more metals-chromium-alloy steel. In some particular aspects, the one or more metals can be selected from the group consisting of molybdenum, cobalt, copper, bismuth, titanium, tungsten, vanadium, manganese and nickel.

The following includes definitions of various terms and phrases used throughout this specification.

Lime is a calcium containing inorganic mineral composed primarily of oxides, and hydroxide, usually calcium oxide and/ or calcium hydroxide. Addition of lime as discussed in this disclosure can include addition of calcium oxide or calcium hydroxide or both.

The terms "about" or "approximately" are defined as being close to as understood by one of ordinary skill in the art. In one non-limiting embodiment the terms are defined to be within 10%, preferably, within 5%, more preferably, within 1%, and most preferably, within 0.5%.

The terms "wt. %", "vol. %" or "mol. %" refer to a weight, volume, or molar percentage of a component, respectively, based on the total weight, the total volume, or the total moles of material that includes the component. In a non-limiting example, 10 moles of component in 100 moles of the material is 10 mol.% of component.

The term "substantially" and its variations are defined to include ranges within 10%, within 5%, within 1%, or within 0.5%.

The terms "inhibiting" or "reducing" or "preventing" or "avoiding" or any variation of these terms, when used in the claims and/or the specification, includes any measurable decrease or complete inhibition to achieve a desired result.

The term "effective," as that term is used in the specification and/or claims, means adequate to accomplish a desired, expected, or intended result.

The use of the words "a" or "an" when used in conjunction with the term "comprising," "including," "containing," or "having" in the claims or the specification may mean "one," but it is also consistent with the meaning of "one or more," "at least one," and "one or more than one."

The words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps.

The process of the present invention can "comprise," "consist essentially of," or "consist of" particular ingredients, components, compositions, etc., disclosed throughout the specification.

The term "primarily," as that term is used in the specification and/or claims, means greater than any of 50 wt. %, 50 mol. %, and 50 vol. %. For example, "primarily" may include 50.1 wt. % to 100 wt. % and all values and ranges there between, 50.1 mol. % to 100 mol. % and all values and ranges there between, or 50.1 vol. % to 100 vol. % and all values and ranges there between.

Other objects, features and advantages of the present invention will become apparent from the following figures, detailed description, and examples. It should be understood, however, that the figures, detailed description, and examples, while indicating specific embodiments of the invention, are given by way of illustration only and are not meant to be limiting. In further embodiments, features from specific embodiments may be combined with features from other embodiments. For example, features from one embodiment may be combined with features from any of the other embodiments.

### BRIEF DESCRIPTION OF THE DRAWINGS

For a more complete understanding, reference is now made to the following descriptions taken in conjunction with the accompanying drawings, in which:

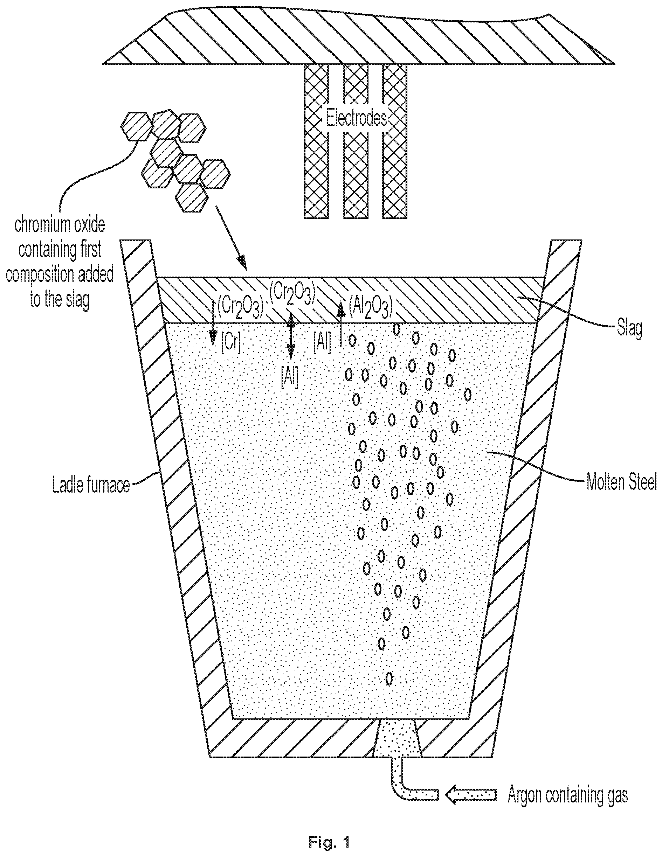

**FIG. 1****:** Chromium oxide recycling and forming chromium-alloy steel in ladle furnace during secondary steel making process, according to one embodiment of the invention.

### DETAILED DESCRIPTION OF THE INVENTION

A discovery has been made that provides a solution to the problems of disposal of chromium oxide containing waste material. The solution is premised on reducing chromium oxide to metallic chromium and using the metallic chromium to produce chromium alloy steel.

In aspects of the present invention, a process for recycling chromium oxide and forming chromium-alloy steel is described. A first composition containing chromium oxide is added to a second composition containing molten steel. The chromium oxide is reduced to form metallic chromium and the metallic chromium gets mixed with the molten steel to form chromium-alloy steel. The amount of chromium oxide added can depend on targeted chromium content of chromium-alloy steel being formed.

The first composition can be a chromium oxide containing waste material. In some aspects, the first composition is a chromium oxide containing spent catalyst. In some aspect the chromium oxide can be chromium (III) oxide (Cr₂O₃). In some aspects, the first composition can contain alumina and Cr₂O₃. In some particular aspects, the first composition can contain at least any one of, equal to any one of, or between any two of 10 wt. %, 11 wt. %, 12 wt. %, 13 wt. %, 14 wt. %, 15 wt. %, 16 wt. %, 17 wt. %, 18 wt. %, 19 wt. %, 20 wt. %, 21 wt. %, 22 wt. %, 23 wt. %, 24 wt. %, and 25 wt. % Cr₂O₃ and at least any one of, equal to any one of, or between any two of 70 wt. %, 71 wt. %, 72 wt. %, 73 wt. %, 74 wt. %, 75 wt. %, 76 wt. %, 77 wt. %, 78 wt. %, 79 wt. %, 80 wt. %, 81 wt. %, 82 wt. %, 83 wt. %, 84 wt. %, and 85 wt. % Al₂O₃. The first composition can optionally contain SiO₂ and K₂O with total SiO₂ and K₂O content at least any one of, equal to any one of, or between any two of 0 wt. %, 1 wt. %, 2 wt. %, 3 wt. %, 4 wt. % and 5 wt. %. The chromium can be reduced at a temperature at least any one of, equal to any one of, or between any two of 1400 °C, 1450 °C, 1500 °C, 1550 °C, 1600 °C, 1650 °C, 1700 °C, 1750 °C and 1800 °C.

The chromium oxide is reduced by metallic aluminum, and the process includes adding aluminum to the second composition. Aluminum can be added to the second composition before, during and/or after addition of the first composition to the second composition. In some aspects, at least a portion of the aluminum added can reduce the chromium oxide to form alumina and the metallic chromium and at least a portion of the aluminum added can remove dissolved oxygen present in the molten steel by reacting with the dissolved oxygen to form alumina. In some aspects, a minimum quantity of aluminum can be added, where the minimum quantity depends on the dissolved oxygen content of the molten steel and an amount of chromium oxide added to the second composition.

In some aspects, the second composition can contain a slag on a top portion of the molten steel. In some aspects, the first composition can be added to the slag. In some aspects, the first composition can enter the molten steel from the slag, the chromium oxide can get reduced in the molten steel to form the metallic chromium and the metallic chromium can get mixed with the molten steel. The slag can absorb alumina and can remove alumina from the molten steel Alumina particles present in the molten steel can float up and get absorbed in the slag. The alumina particles in the molten steel can be at least a portion of the alumina added and/or formed during the process. The alumina added during the process can be the alumina from the first composition added. The alumina formed during the process can be the alumina formed by reduction of chromium oxide with the aluminum added and the alumina formed by the reaction of the dissolved oxygen in the molten steel with the aluminum added. In some aspects, an argon containing gas can be purged from a bottom portion of the molten steel. The argon containing gas can aid the floating up of the alumina particles in the molten steel. In some aspects, lime can be added to the slag. The lime added can aid the absorbing of alumina by the slag. The amount of lime added can depend on the alumina added and/or formed during the process. In some aspects, a slag conditioner can be added to the slag. The slag conditioner can be used as required to achieve target slag condition to facilitate final steel alloy formation and remove alumina effectively from the molten steel. In some aspects, the slag conditioner can be limestone, dolomite, calcium aluminate, fluorspar or a combination thereof.

In some aspects the slag can be a basic slag. In some aspects, the slag can contain CaO, Al₂O₃, SiO₂ and MgO.

In some aspects, one or more metals can be added to the second composition, and the one or more metals can be or can get mixed with the molten steel to form a one or more metals-chromium-alloy steel. The one or more metals can be selected from the group consisting of molybdenum, cobalt, copper, bismuth, titanium, tungsten, vanadium, manganese and nickel.

In some aspects, the process can be performed in a ladle furnace during a secondary steel making process. The first composition can be added to the second composition in a ladle furnace. The chromium oxide can get reduced and metallic chromium formed can get mixed with the molten steel in the ladle furnace. The molten steel can be refined in a ladle furnace. In the ladle furnace, the molten steel can be de-sulphurised and impurities can be removed from the molten steel. FIG. 1 shows chromium oxide recycling and forming chromium alloy steel in the ladle furnace during the secondary steel making process.

The following 20 embodiments are described which are not according to the invention. Embodiment 1 is a process for recycling chromium oxide and forming chromium-alloy steel, the process includes (a) adding an effective amount of a first composition containing chromium oxide to a second composition containing molten steel; and (b) reducing the chromium oxide under conditions suitable to form metallic chromium, wherein the metallic chromium gets mixed with the molten steel to form chromium-alloy steel. Embodiment 2 is the process of embodiment 1, wherein the chromium oxide is chromium (III) oxide (Cr₂O₃). Embodiment 3 is the process of embodiment 2, wherein the first composition further contains alumina. Embodiment 4 is the process of embodiment 3, wherein first composition comprises 10 to 25 wt. % Cr₂O₃ and 70 to 85 wt. % alumina. Embodiment 5 is the process of embodiment 4, wherein the first composition further comprises 0 to 5 wt. % in total SiO₂ and K₂O. Embodiment 6 is the process of any one of embodiments 1 to 5, wherein the first composition is a spent catalyst. Embodiment 7 is the process of any one of embodiments 1 to 6, wherein in step (b) the chromium oxide is reduced by aluminum and the process includes adding aluminum to the second composition. Embodiment 8 is the process of embodiment 7, wherein the aluminum is added to the second composition before, during, and/or after addition of the first composition to the second composition. Embodiment 9 is the process of embodiments 7 or 8, wherein at least a portion of the aluminum added reduces the chromium oxide added to form the metallic chromium and alumina and at least a portion of the aluminum added reacts with dissolved oxygen in the molten steel to form alumina. Embodiment 10 is the process of any one of Embodiments 7 to 9, wherein the aluminum is added as an aluminum dross and/or an aluminum wire. Embodiment 11 is the process of any one of embodiments 1 to 10, wherein the step (b) conditions includes a temperature of 1200 to 2000 °C. Embodiment 12 is the process of any one of embodiments 1 to 11, wherein the second composition contains a slag on a top portion of the molten steel. Embodiment 13 is the process of embodiment 12, wherein in step (a) the first composition is added to the slag. Embodiment 14 is the process of embodiments 12 or 13, wherein the process further includes adding lime to the slag. Embodiment 15 is the process of any one of embodiments 12 to 14, wherein the slag absorbs at least a portion of the alumina formed and added during the process. Embodiment 16 is the process of any one of embodiments 1 to 15, wherein the method further includes purging an argon containing gas from a bottom portion of the molten steel. Embodiment 17 is the process of any one of embodiments 1 to 16, wherein the process is performed during a secondary steel making process. Embodiment 18 is the process of embodiment 17, wherein the process is performed in a ladle furnace. Embodiment 19 is the process of any one of embodiments 1 to 18, the process further contains adding one or more metals to the second composition wherein the one or more metals gets mixed with the molten steel to form one or more metals-chromium-alloy steel. Embodiment 20 is the process of embodiment 19, wherein the one or more metals is selected from the group consisting of molybdenum, cobalt, copper, bismuth, titanium, tungsten, vanadium, manganese and nickel.

## Claims

1. A process for forming chromium-alloy steel from chromium oxide, the process comprising:
(a) adding an effective amount of a first composition comprising 10 to 25 wt. % Cr₂O₃, 70 to 85 wt. % alumina, and 0 to 5 wt.% in total SiO₂ and K₂O to a second composition comprising molten steel; and
(b) reducing the Cr₂O₃ under conditions suitable to form metallic chromium,
wherein the metallic chromium gets mixed with the molten steel to form chromium-alloy steel;
wherein in step (b) the Cr₂O₃ is reduced to chromium metal by metallic aluminum and the process comprises adding the metallic aluminum to the second composition; and
wherein the process is performed in a ladle furnace.

2. The process of claim 1, wherein the first composition comprises 1 to 5 wt. % in total SiO₂ and K₂O.

3. The process of claim 1, wherein the first composition comprises 10 wt. % Cr₂O₃ or 70 wt. % alumina.

4. The process of claim 1, wherein the first composition comprises 25 wt. % Cr₂O₃ or 85 wt. % alumina.

5. The process of claim 1, wherein the first composition further comprises 2 to 5 wt. % in total SiO₂ and K₂O.

6. The process of any one of claims 1 to 4, wherein the first composition is a spent catalyst.

7. The process of any one of claims 1 to 4, wherein the first composition further comprises 3 to 5 wt. % in total SiO₂ and K₂O.

8. The process of claim 1, wherein the metallic aluminum is added to the second composition before, during, and/or after addition of the first composition to the second composition.

9. The process of claim 1, wherein at least a portion of the metallic aluminum added reduces the chromium oxide added, to form the metallic chromium and alumina and at least a portion of the metallic aluminum added reacts with dissolved oxygen in the molten steel, to form alumina.

10. The process of claim 1, wherein the metallic aluminum is added as an aluminum dross and/or an aluminum wire.

11. The process of any one of claims 1 to 4, wherein the second composition comprises a slag on a top portion of the molten steel.

12. The process of claim 11, wherein in step (a) the first composition is added to the slag.

13. The process of claim 11, further comprising adding lime to the slag.

14. The process of claim 11, wherein the slag contains CaO, Al₂O₃, SiO₂ and MgO.

15. The process of any one of claims 1 to 4, wherein the process further comprises adding one or more metals to the second composition, wherein the one or more metals gets mixed with the molten steel to form one or more metals-chromium-alloy steel; and wherein the one or more metals is selected from the group consisting of molybdenum, cobalt, copper, bismuth, titanium, tungsten, vanadium, manganese and nickel.

## Patentansprüche

1. Verfahren zum Herstellen von chromlegiertem Stahl aus Chromoxid, wobei das Verfahren Folgendes umfasst:
(a) Zugeben einer wirksamen Menge einer ersten Zusammensetzung, die 10 bis 25 Gew.-% Cr₂O₃, 70 bis 85 Gew.-% Aluminiumoxid und insgesamt 0 bis 5 Gew.-% SiO₂ und K₂O umfasst, zu einer zweiten Zusammensetzung, die eine Stahlschmelze umfasst; und
(b) Reduzieren des Cr₂O₃ unter Bedingungen, die zur Bildung von metallischem Chrom geeignet sind, wobei das metallische Chrom mit der Stahlschmelze vermischt wird, um chromlegierten Stahl zu bilden;
wobei in Schritt (b) das Cr₂O₃ durch metallisches Aluminium zu Chrommetall reduziert wird und das Verfahren das Zugeben des metallischen Aluminiums zu der zweiten Zusammensetzung umfasst; und
wobei das Verfahren in einem Pfannenofen durchgeführt wird.

2. Verfahren nach Anspruch 1, wobei die erste Zusammensetzung insgesamt 1 bis 5 Gew.-% SiO₂ und K₂O umfasst.

3. Verfahren nach Anspruch 1, wobei die erste Zusammensetzung 10 Gew.-% Cr₂O₃ oder 70 Gew.-% Aluminiumoxid umfasst.

4. Verfahren nach Anspruch 1, wobei die erste Zusammensetzung 25 Gew.-% Cr₂O₃ oder 85 Gew.-% Aluminiumoxid umfasst.

5. Verfahren nach Anspruch 1, wobei die erste Zusammensetzung ferner insgesamt 2 bis 5 Gew.-% SiO₂ und K₂O umfasst.

6. Verfahren nach einem der Ansprüche 1 bis 4, wobei die erste Zusammensetzung ein verbrauchter Katalysator ist.

7. Verfahren nach einem der Ansprüche 1 bis 4, wobei die erste Zusammensetzung ferner insgesamt 3 bis 5 Gew.-% SiO₂ und K₂O umfasst.

8. Verfahren nach Anspruch 1, wobei das metallische Aluminium vor, während und/oder nach der Zugabe der ersten Zusammensetzung zu der zweiten Zusammensetzung zu der zweiten Zusammensetzung gegeben wird.

9. Verfahren nach Anspruch 1, wobei mindestens ein Teil des zugegebenen metallischen Aluminiums das zugegebene Chromoxid reduziert, um das metallische Chrom und Aluminiumoxid zu bilden, und mindestens ein Teil des zugegebenen metallischen Aluminiums mit in der Stahlschmelze gelöstem Sauerstoff reagiert, um Aluminiumoxid zu bilden.

10. Verfahren nach Anspruch 1, wobei das metallische Aluminium in Form von Aluminiumkrätze und/oder Aluminiumdraht zugegeben wird.

11. Verfahren nach einem der Ansprüche 1 bis 4, wobei die zweite Zusammensetzung eine auf einem oberen Bereich der Stahlschmelze befindliche Schlacke umfasst.

12. Verfahren nach Anspruch 11, wobei in Schritt (a) die erste Zusammensetzung der Schlacke zugegeben wird.

13. Verfahren nach Anspruch 11, ferner umfassend das Zugeben von Kalk zu der Schlacke.

14. Verfahren nach Anspruch 11, wobei die Schlacke CaO, Al₂O₃, SiO₂ und MgO enthält.

15. Verfahren nach einem der Ansprüche 1 bis 4, wobei das Verfahren ferner das Zugeben eines oder mehrerer Metalle zu der zweiten Zusammensetzung umfasst, wobei das eine oder die mehreren Metalle mit der Stahlschmelze vermischt werden, um einen mit einem oder mehreren Metallen chromlegierten Stahl zu bilden; und wobei das eine oder die mehreren Metalle ausgewählt sind aus der Gruppe, bestehend aus Molybdän, Kobalt, Kupfer, Bismut, Titan, Wolfram, Vanadium, Mangan und Nickel.

## Revendications

1. Procédé de formation d'acier allié au chrome à partir d'oxyde de chrome, le procédé comprenant :
(a) l'ajout d'une quantité efficace d'une première composition comprenant 10 à 25 % en poids de Cr₂O₃, 70 à 85 % en poids d'alumine et 0 à 5 % en poids au total de SiO₂ et de K₂O à une seconde composition comprenant de l'acier en fusion ; et
(b) la réduction du Cr₂O₃ dans des conditions appropriées pour former du chrome métallique, dans lequel le chrome métallique est mélangé à l'acier en fusion pour former un acier allié au chrome ;
dans lequel, à l'étape (b), le Cr₂O₃ est réduit en chrome métallique par de l'aluminium métallique et le procédé comprend l'ajout de l'aluminium métallique à la seconde composition ; et
dans lequel le procédé est réalisé dans un four-poche.

2. Procédé selon la revendication 1, dans lequel la première composition comprend 1 à 5 % en poids au total de SiO₂ et de K₂O.

3. Procédé selon la revendication 1, dans lequel la première composition comprend 10 % en poids de Cr₂O₃ ou 70 % en poids d'alumine.

4. Procédé selon la revendication 1, dans lequel la première composition comprend 25 % en poids de Cr₂O₃ ou 85 % en poids d'alumine.

5. Procédé selon la revendication 1, dans lequel la première composition comprend en outre 2 à 5 % en poids au total de SiO₂ et de K₂O.

6. Procédé selon l'une quelconque des revendications 1 à 4, dans lequel la première composition est un catalyseur usé.

7. Procédé selon l'une quelconque des revendications 1 à 4, dans lequel la première composition comprend en outre 3 à 5 % en poids au total de SiO₂ et de K₂O.

8. Procédé selon la revendication 1, dans lequel l'aluminium métallique est ajouté à la seconde composition avant, pendant et/ou après l'ajout de la première composition à la seconde composition.

9. Procédé selon la revendication 1, dans lequel au moins une partie de l'aluminium métallique ajouté réduit l'oxyde de chrome ajouté, pour former le chrome métallique et l'alumine et au moins une partie de l'aluminium métallique ajouté réagit avec l'oxygène dissous dans l'acier en fusion, pour former de l'alumine.

10. Procédé selon la revendication 1, dans lequel l'aluminium métallique est ajouté sous forme d'écumage d'aluminium et/ou de fil d'aluminium.

11. Procédé selon l'une quelconque des revendications 1 à 4, dans lequel la seconde composition comprend un laitier sur une partie supérieure de l'acier en fusion.

12. Procédé selon la revendication 11, dans lequel, à l'étape (a), la première composition est ajoutée au laitier.

13. Procédé selon la revendication 11, comprenant en outre l'ajout de chaux au laitier.

14. Procédé selon la revendication 11, dans lequel le laitier contient du CaO, de l'Al₂O₃, du SiO₂ et du MgO.

15. Procédé selon l'une quelconque des revendications 1 à 4, dans lequel le procédé comprend en outre l'ajout d'un ou de plusieurs métaux à la seconde composition, dans lequel le ou les métaux sont mélangés à l'acier en fusion pour former un acier allié au chrome et à un ou plusieurs métaux ; et dans lequel le ou les métaux sont choisis dans le groupe constitué par le molybdène, le cobalt, le cuivre, le bismuth, le titane, le tungstène, le vanadium, le manganèse et le nickel.
